# EUROPEAN PATENT APPLICATION

(11) **EP 4 029 964 A1**
(43) Date of publication of application: **20.07.2022**
(21) Application number: 21151617.4
(22) Date of filing: 14.01.2021
(51) Int. Cl.: C23C 2/06, C21D 1/06, C21D 1/09, C21D 1/10, C21D 1/42, C21D 6/00, C21D 6/02, C21D 9/00, C23C 8/22, C23C 8/46, C23C 8/66, F16B 23/00, F16B 25/00, F16B 27/00, F16B 29/00, F16B 31/00, F16B 35/00

(54) **HARDENING OF A ZINC COATED SCREW BODY**

(71) Applicant: Hilti Aktiengesellschaft, 9494 Schaan (LI)
(72) Inventor: Schneider, Roland, 6824 Schlins (AT); Tomandl, Alexander, 6800 Feldkirch (AT); Rohr, Juergen, 9464 Rüthi (CH)
(74) Representative: Hilti Aktiengesellschaft Corporate Intellectual Property

(57) **Abstract**

The invention relates to a method for processing a screw body, comprising a screw body providing step in which a screw body made of a hardenable steel is provided, a primary coating step, in which the screw body is coated with a primary coating that comprises zinc, wherein the primary coating step follows the screw body providing step, and a tip hardening step, in which a tip region of the screw body, which is coated with the primary coating, is selectively heated, at least in part and with the ad-mission of oxygen, to a temperature required for hardening, characterized in that the tip hardening step follows the primary coating step. The invention further relates to a screw that can be obtained using this method.

## Description

The invention relates to a method for processing a screw body, in particular so as to obtain a screw, more preferably a concrete screw, and to a screw.

A one-step process for hardening a concrete screw body is known from WO 12084386 A1. According to WO 12084386 A1, a carbon steel screw body is carbonitrided and then quenched.

WO 12084388 A1 describes a method for producing a concrete screw, in which the tip region of a screw body is selectively hardened. WO 12084388 A1 also describes a two-step heat treatment process comprising carbonitriding and subsequent induction hardening of the tip region of the screw body.

At the end of a one-step heat treatment process or of a two-step heat treatment process, a zinc coating might be applied so as to improve corrosion protection. However, a hot-dip galvanizing step (HDG) might not be suitable for this purpose due to the temperature range usually required for the molten zinc bath used in hot dip galvanizing: This temperature range may constitute an annealing operation to the hardened steel body (>600HV10 in hardened sections) that changes the steel microstructure into a soft and non-hardened condition (<600 HV10), and therefore neutralizes the preceding hardening heat treatment process.

Electroplating and/or Zn flake coatings can therefore be applied, but this might be costly and/or technologically challenging, in particular if high coating thickness is required.

Partial HDG coating, which leaves out the tip region, might also be complex and costly.

Stainless steel could be used as an alternative to coated carbon steel for outdoor applications. However, complex and expensive design and manufacturing concepts often have to be applied in view of the properties of common stainless steels.

TW201416574 A teaches applying a HDG coating after a case hardening step for specific self-drilling screws, and teaches process parameters considered suitable for this process.

Further hardening methods for concrete screws are disclosed in DE 10113946 A1 and WO15018821 A1.

US2007271978 A1 describes a method for producing a hardened profiled structural part from a hardenable steel alloy, comprising: applying a coating to a sheet made of a hardenable steel alloy, wherein the coating comprises zinc, and the coating further comprises one or several elements with affinity to oxygen; subsequently roller-profiling the coated sheet steel in a profiling device, so that the sheet tape is formed into a roller-formed profiled strand; thereafter heating the coated sheet steel, at least in part and with the admission of atmospheric oxygen, to a temperature required for hardening, and heating the coated sheet steel to a structural change required for hardening; wherein a skin made of an oxide of the element(s) with affinity to oxygen is formed on the surface of the coating.

US 6564604 B2 describes a method in which a rolled steel sheet coated with zinc or zinc alloy is provided, heated at 800° to 1200°, and then formed.

JP2080805 A2 describes a method in which a drilling screw is case hardened, at least partly zinc coated and then heat treated, as a whole, and to relatively low temperatures and/or at relatively short times, in order to specifically modify the coating.

It is an object of the invention to provide particularly high process versatility, and to obtain a particularly well-performing screw at particularly low effort, preferably a concrete screw suitable for outdoor applications.

This object is achieved by a method according to claim 1 and a screw according to claim 11. Dependent claims refer to preferred embodiments of the method.

The invention proposes a method for processing a screw body, comprising
- a screw body providing step in which a screw body made of a hardenable steel is provided,
- a primary coating step, in which the screw body is coated with a primary coating that comprises zinc, wherein the primary coating step follows the screw body providing step, and
- a tip hardening step, in which a tip region of the screw body, which is coated with the primary coating, is selectively heated, at least in part and with the admission of oxygen, to a temperature required for hardening,
   **characterized** in that
- the tip hardening step follows the primary coating step.

A fundamental concept of the invention is to apply the (primary) zinc coating before the final tip hardening step.

The invention is based on the finding that steel fasteners with a zinc-containing primary coating can be tip-hardened via a typical heat treatment even when this heat treatment is conducted at temperatures well above the melting point and even above the evaporation point of pure zinc (in particular for example with maximum temperature above austenitization temperature of the steel), and that this selective hardening in presence of a zinc coating may result in a particularly advantageous spatial distribution of the composition of the coating, in particular in view of concrete screw applications. Not only can corrosion protection be maintained all along the screw body - but also can the tip region be provided with properties that are particular advantageous in view of alkaline environments, which are typically present in concrete. These findings might be attributed to the following mechanisms:
- It was found that when zinc coated steel is quickly heated up in air (e.g. by induction), the zinc is rapidly oxidized to zinc oxide. No molten zinc might be observed. Some of the zinc, which is transformed to zinc oxide, might produce smoke or dust in the heat treatment facility, but this can be easily removed by suction or ventilation. Since the oxidization takes primarily place at the surface of the zinc layer, a zinc oxide superlayer might form at the zinc layer, that prevents the zinc layer underneath from further oxidation.
- In particular when the primary coating is provided by hot dip galvanization, the primary coating might consist largely of ZnFe phases. In the case of dip-spun parts (i.e. parts that are spun following the dipping into molten Zn, in order to remove excessive Zn), even the entire primary coating may consist of ZnFe phases without any pure zinc. However, such phases ZnFe have a significantly higher melting point as compared to pure zinc, making them more robust when heated.
During the heat treatment included in the tip hardening step, diffusion of iron from the screw body into the primary coating may start over, thereby further increasing the iron content in the zinc-containing primary coating and therefore also the melting point of the primary coating.

These two factors (i.e. Zn oxidation and ZnFe diffusion) can generally prevent the primary coating from being completely burned off during heat treatment of the tip hardening step. Therefore, the screw body can still have sufficient corrosion protection over the entire length down to the tip region, in particular also including the tip region that experienced the tip hardening step (which is preferably an inductive tip hardening step).

In addition to that, the final coating of the screw body will be relatively iron rich in the tip region. However, a coating that is rich in iron might be more stable in alkaline environment, which is typically present in concrete. Therefore, the screw body can advantageously be a concrete screw body. Except for the tip region, the rest of the screw body still has the original primary coating, which can give best sacrificial corrosion protection for the parts that are located outside of the concrete, where atmospheric corrosion takes place. Accordingly, both the necessary hardness for concrete cutting and no impairment of the corrosion-protective effect of the zinc coating can be achieved.

Since the tip hardening step follows the primary coating step, the thermal impact of the primary coating step does not affect the tip hardening step (in contrast to a conventional process, in which the primary coating is applied after hardening). As a consequence, the temperatures that can be used in the primary coating step can be relatively high, providing particularly good versatility with respect to that step. In particular, hot dip galvanizing (HDG) may be used without significant constraints. Using HDG, in term, can provide the following benefits:
- Relatively low process costs
- Particularly good corrosion protection
- High acceptance of a HDG coating.

All in all, a particularly high process versatility can be achieved, and a particularly well-performing screw can be obtained at particularly low effort.

The screw body has a shank and at least one screw thread structure provided thereon. In particular, the screw body can be monolithic. The screw body can for example be obtained by providing a piece of wire and preferably applying at least one metal forming operation or/and at least one metal cutting operation to the piece of wire in order to shape the screw body. These operations can be alternatively considered to be part of the screw body providing step or of a manufacturing step that is performed before the screw body providing step.

The tip is that end of the screw which is intended to be inserted first into the substrate when the screw is installed. The tip region is located adjacent to the tip. A head might be provided at that end of the screw body that is located opposite the tip, but the screw body might also be headless.

Preferentially, in the primary coating step, the screw body can be coated with a primary coating that comprises zinc by 50 wt. % or more, i.e. the zinc content is significant.

Preferably, the oxygen that is present in the tip hardening step is atmospheric oxygen. An additional shielding gas might be optionally present.

It can be preferably envisaged that no additional hardening step is performed on the screw body between the screw body providing step and the primary coating step. Accordingly, the hardness of the screw body is left generally unaltered between the screw body providing step and the tip hardening step. This single step hardening sequence might be particularly easy to perform.

Alternatively, the method may further include a case hardening step, in which the screw body is case hardened, wherein the case hardening step follows the screw body providing step, and wherein the primary coating step follows the case hardening step. Accordingly, a two-step hardening process is provided: First in sequence is the case hardening step, in which the entire screw body is case hardened, then follows the primary coating step and subsequently the tip hardening step, in which the screw body tip is selectively hardened and the remainder of the screw body is left generally unaltered. Providing a case hardening step might balance the need for a low carbon content necessary for metal forming in order to provide the screw body, and the need for a higher carbon content necessary for sufficient surface hardness. In particular, the case hardening step might be a carburizing step, in which the screw body is carburized. Alternatively, the case hardening step might be a nitriding step or a nitrocarburizing step, or similar.

In particular, the screw body that is provided in the screw body providing step can consist of a hardenable carbon steel, more preferably of a carbon steel with a carbon content that ranges from 0.1 wt.% to 0.5 wt.%. Accordingly, the carbon content can be between 0.1 % to 0.5 %, 0.1 % and 0.5 % inclusive. These steel grades can provide particularly favourable mechanical properties, such as high hardness together with high ductility and good formability. The steel grades are non-stainless and could be prone to corrosive attack if not protected by suitable protective coatings. Advantageously, the screw body can consist of 20MnB4 grade steel. If the screw body consists of a hardenable carbon steel, the tip hardening step and/or the optional case hardening step might include heating the screw body to a temperature above austenitization temperature of the steel.

Preferably, the primary coating which is applied in the primary coating step has a thickness from that ranges from 20 µm to 100 µm, preferably from 30 µm to 80 µm. Accordingly, the thickness can be between 20 µm to 100 µm, 20 µm and 100 µm inclusive, preferably 30 µm to 80 µm, 30 µm and 80µm inclusive. These ranges can provide particularly good corrosion protection at low expense.

As already explained in some detail above, it is advantageous if, in the primary coating step, the screw body is coated with the primary coating by means of hot-dip galvanizing (HDG). Hot dip galvanizing includes dipping the screw body into a molten bath containing Zinc, in particular by 98 wt. % or more, preferably at temperature ranging from 440°C to 460°C. HDG can be employed both in the one-step and in the two-step sequence described above. In particular, HDG can be carried out in accordance with ISO 1461.

As an alternative to HDG, the screw body could for example be coated with the primary coating by means of electroplating in the primary coating step.

As already mentioned above, the primary coating step can preferably include a spinning process of the screw body to remove excessive coating material, in particular from threaded regions of the screw body. This can provide that a predominantly Zn-Fe phase is present on the surface of the screw body in the subsequent tip hardening step. Since the Zn-Fe phase is particularly thermostable, a particularly advantageous coating finish can be obtained at low effort.

As already mentioned above, the tip hardening step might advantageously include inductively heating the tip region of the screw body. This mode of operation can further reduce manufacturing effort whilst providing particularly well-performing hardness profiles.

According to another preferred embodiment, the method may comprise a top coating step, in which the screw body is coated with a top coating, wherein the top coating step follows the tip hardening step. The top coating might, for example, be selectively applied to the tip region of the screw body, or alternatively to the entire screw. The top coating can for example be a ZnAI flake coating, polymer paint, or others. By applying a top coating, both the corrosion protection in the tip region (in particular against alkaline concrete attack) as well as the corrosion protection outside of the borehole (in particular against atmospheric corrosion) can be further improved.

As already mentioned above, the screw obtained in the method is preferably a concrete screw, i.e. the screw, in particular the thread thereof, is able to, at least partly, tap its mating internal screw thread groove in a concrete substrate. In particular, a ratio of the maximum outer thread diameter of the thread of the screw body to the pitch of said thread can range from 1 to 2, in particular from 1.2 to 1.6, at least in some regions of said thread, more preferably at least in the tip region, most preferably throughout the thread. These are typical dimensions for concrete screws.

The invention also relates to a screw comprising a steel screw body and a primary coating that covers the screw body, wherein the screw body has a tip region, wherein the screw body has higher surface hardness in the tip region as compared to regions of the screw body that are distant from the tip region, wherein the primary coating comprises Zn phases and ZnFe phases, and wherein the average Fe content of the primary coating is higher at the tip region as compared to regions of the screw body that are distant from the tip region. This is the consequence of the selective tip hardening of the tip hardening step, which locally affects the primary coating in the tip region.

Features that are described here in connection with the screw can also be used in connection with the method and features that are described here in connection with the method can also be used in connection with the screw.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a process chart of an exemplary method for processing a screw body.
Figure 2 is a schematic longitudinally sectional view of an exemplary screw body that may be provided in the screw body providing step of the method of figure 1.
Figure 3 is a schematic longitudinally sectional view of an exemplary coated screw body that may be obtained in the primary coating step (and before the tip hardening step) of the method of figure 1.
Figure 4 is a schematic longitudinally sectional view of an exemplary coated screw body that may be obtained in the tip hardening step (and before the top coating step) of the method of figure 1.

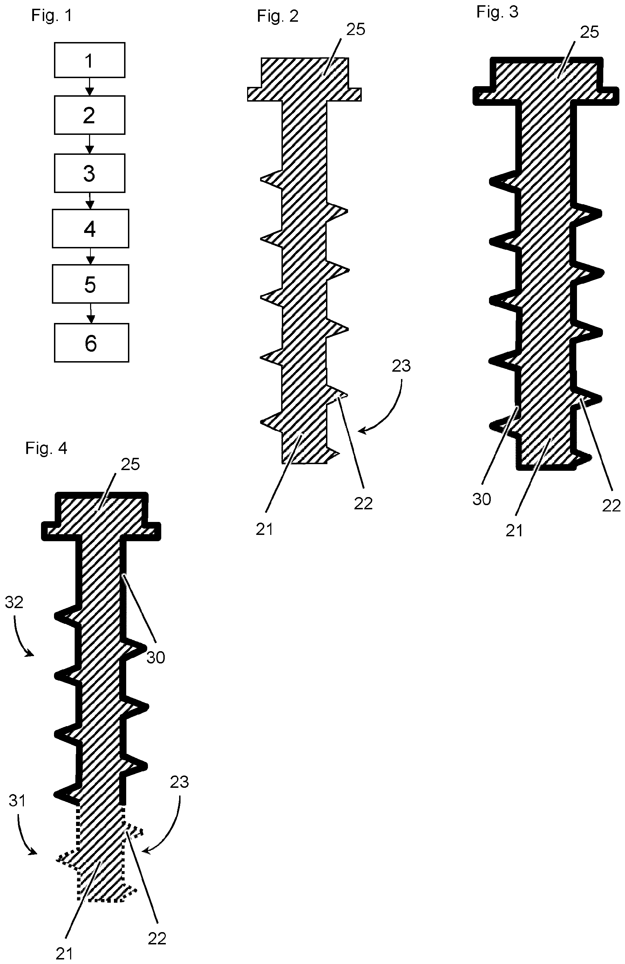

A process chart of an exemplary method for processing a screw body is shown in fig. 1.

The process sequence starts with a screw body providing step 1, in which a screw body made of a hardenable steel, in particular carbon steel (i.e. a steel with a carbon content that ranges from about 0.05% up to about 2.1% by weight), is provided. Preferably, the carbon content ranges from 0.1 wt.% to 0.5 wt.%. As shown, by way of example, in figure 2, the screw body includes a shank 21 and at least one generally helical screw thread 22 provided thereon. The screw body has a tip region 23, which is that region of the shank 21 that is intended to be first inserted into a substrate when the screw derived from the screw body is installed as intended. Optionally, the screw body might have a head 25, that is arranged on that end of the screw body that is opposite to the tip region 23, or the screw body might have another drive structure for imparting torque onto the shank 21. Again optionally, the screw body might have at least one cutting edge (not shown) provided within the shank 21, in particular in the tip region 23.

The screw body might be obtained, for example, by performing forming operations, such as thread rolling and/or head upsetting, on a piece of wire. These operations could be considered to be part of the screw body providing step 1, or they can be considered to be part of a separate manufacturing step, which precedes the screw body providing step 1.

The screw body providing step is followed by an optional case hardening step 2. In the present embodiment, the case hardening step 2 is a carburizing step, which includes heating the screw body in an atmosphere containing carbon.

The screw body providing step 1 and, if applicable, the case hardening step 2, is followed by a primary coating step 3, in which the screw body is coated with a primary coating 30 that comprises zinc. In particular, the primary coating step 3 includes hot dip galvanizing to apply the primary coating 30 to the screw body. Preferably, the primary coating step 3 can also include a spinning process, in which the screw body is spun in order to remove an excess of the primary coating 30. The hot dip galvanizing is preferably carried out with the process parameters, in particular temperatures, defined in ISO 10684. The structure resulting from the primary coating step 3 is schematically shown in figure 3.

Note that the case hardening step 2 usually needs to be performed before the primary coating step 3, since the primary coating 30 usually would not withstand the high process temperature of a typical case hardening step 2.

The primary coating step 3 is followed by a tip hardening step 4. In the tip hardening step 4, the tip region 23 of the screw body is selectively hardened by heating, preferably by inductive heating, whereas the rest of the screw body is left generally unaltered. This step causes a local increase of oxidization of the zinc of the primary coating 30, but as explained above, this can be tolerated. As a consequence, the primary coating 30 has an oxidized first zone 31, located in the tip region 23, where the percentage of zinc oxide in the primary coating 30 is higher as compared to a second zone 32 of the primary coating 30 that is located remote from the tip region 23, in particular rearwardly of the tip region 23. Alternatively or additionally, the average Fe content of the primary coating 30 (the primary coating 30 comprises Zn phases and ZnFe phases) is higher in the first zone 31, located in the tip region 23, as compared to the second zone 32 that is located remote from the tip region 23. In the tip region 32, the screw body has higher surface hardness as compared to regions of the screw body that are distant from the tip region, in particular rearwardly thereof. The resulting structure is shown in figure 4.

The structure shown in figure 4 can be considered to be a screw that is ready for use.

Optionally, the tip hardening step 4 might be followed by a cleaning step 5. In this cleaning step, loose zinc oxide (ZnO) and smoke residue can be removed from the screw body of the screw.

Optionally, the tip hardening step 4 and the optional cleaning step 5 might be followed by a top coating step 6, in which the screw body of the screw is additionally coated with a topcoat.

## Claims

1. Method for processing a screw body, comprising
- a screw body providing step (1) in which a screw body made of a hardenable steel is provided,
- a primary coating step (3), in which the screw body is coated with a primary coating (30) that comprises zinc, wherein the primary coating step (3) follows the screw body providing step (1), and
- a tip hardening step (4), in which a tip region (23) of the screw body, which is coated with the primary coating (30), is selectively heated, at least in part and with the admission of oxygen, to a temperature required for hardening,
**characterized in that**
- the tip hardening step (4) follows the primary coating step (3).

2. Method according to claim 1,
**characterized in that**
no additional hardening step is performed on the screw body between the screw body providing step (1) and the primary coating step (3).

3. Method according to claim 1,
further comprising a case hardening step (2), in which the screw body is case hardened, wherein the case hardening step (2) follows the screw body providing step (1), and wherein the primary coating step (3) follows the case hardening step (2).

4. Method according to claim 3,
**characterized in that**
the case hardening step (2) is a carburizing step, in which the screw body is carburized.

5. Method according to any of the preceding claims,
**characterized in that**
the screw body that is provided in the screw body providing step (1) consists of a hardenable carbon steel with a carbon content that ranges from 0.1 wt.% to 0.5 wt.%.

6. Method according to any of the preceding claims,
**characterized in that**
the primary coating (30) which is applied in the primary coating step (3) has a thickness that ranges from 20 µm to 100µm, preferably from 30 µm to 80 µm.

7. Method according to any of the preceding claims,
**characterized in that**
in the primary coating step (3), the screw body is coated with the primary coating (30) by means of hot dip galvanizing (HDG).

8. Method according to any of the preceding claims,
**characterized in that**
the primary coating step (3) includes a spinning process of the screw body to remove excessive coating material, in particular from threaded regions of the screw body.

9. Method according to any of the preceding claims,
**characterized in that**
tip hardening step (4) includes inductively heating the tip region (23) of the screw body.

10. Method according to any of the preceding claims,
further comprising a top coating step (6), in which the screw body is coated with a top coating, wherein the top coating step (6) follows the tip hardening step (4).

11. Method according to any of the preceding claims,
**characterized in that**
a ratio of the maximum outer thread diameter of a thread (22) of the screw body to the pitch of said thread (22) ranges from 1 to 2, in particular from 1.2 to 1.6, at least in some regions of said thread (22).

12. Screw comprising a steel screw body and a primary coating (30) that covers the screw body, wherein the screw body has a tip region (23), wherein the screw body has higher surface hardness in the tip region (23) as compared to regions of the screw body that are distant from the tip region (23), wherein the primary coating (30) comprises Zn phases and ZnFe phases, and wherein the average Fe content of the primary coating (30) is higher at the tip region (23) as compared to regions of the screw body that are distant from the tip region (23).
